# FASCICULE DE BREVET EUROPEEN

(11) **EP 1 781 478 B1**
(45) Date de publication et mention de la délivrance du brevet: **05.12.2007**
(21) Numéro de dépôt: 05733463.3
(22) Date de dépôt: 11.04.2005
(51) Int. Cl.: B60H 1/00

(54) **DISPOSITIF DE CHAUFFAGE, VENTILATION ET/OU CLIMATISATION D'UN HABITACLE DE VEHICULE A REGLAGES SEPARES PAR ZONES DE L'HABITACLE**
PRO INNENRAUMBEREICH GETRENNT STEUERBARE HEIZ-, VENTILATIONS- UND/ODER KLIMATISIERUNGSVORRICHTUNG FÜR DEN INNENRAUM EINES FAHRZEUGS
SEPARATELY CONTROLLABLE BY COMPARTMENT AREAS HEATING, VENTILATING AND/OR AIR CONDITIONING DEVICE FOR THE PASSENGER COMPARTMENT OF A VEHICLE

(30) Priorité: 10.05.2004 FR 0405028
(43) Date de publication de la demande: 09.05.2007
(73) Titulaire: VALEO SYSTEMES THERMIQUES, 78321 Le Mesnil St Denis Cedex (FR)
(72) Inventeur: POUYSEGUR, Serge, F-78310 Le Perray en Yvelines (FR); ELLIOT, Gilles, F-91080 Courcouronnes (FR); BOULANGER, Alexandre, F-94190 Villeneuve St Georges (FR)
(86) Numéro de dépôt international: PCT/EP2005/051587
(87) Numéro de publication internationale: WO 2005/108138

(56) Documents cités:
- DE-A- 19 919 132
- FR-A- 2 829 064
- US-A- 5 934 989
- US-A- 6 019 163

## Description

L'invention concerne un dispositif de chauffage, ventilation et/ou climatisation d'un habitacle, notamment de véhicule automobile.

Plus particulièrement, l'invention concerne un dispositif comprenant un boîtier muni d'une entrée d'air pulsé, un radiateur de chauffage comportant un faisceau de tubes parcouru par un fluide caloporteur, le radiateur étant logé dans le boîtier, et un passage d'air chaud divisé en au moins deux canaux d'air chaud pour acheminer des flux d'air chaud respectifs traversant le radiateur vers des zones différentes de l'habitacle.

On connaît déjà des dispositifs de ce genre qui sont prévus pour permettre un réglage séparé des paramètres aérothermiques dans des zones différentes de l'habitacle, par exemple, dans une zone droite et une zone gauche.

Le réglage de la température peut s'effectuer soit par réglage du débit du fluide caloporteur qui traverse le radiateur, soit le plus souvent par mixage d'un flux d'air chaud issu du radiateur et d'un flux d'air froid n'ayant pas traversé le radiateur.

Dans ce dernier cas, on associe généralement un canal de dérivation à chaque canal d'air chaud, pour acheminer un flux d'air froid qui ne traverse pas le radiateur de chauffage.

Des moyens de réglage sont alors prévus pour répartir en proportion variable le flux d'air chaud qui traverse un canal d'air chaud et le flux d'air froid associé qui traverse le canal de dérivation. On peut ainsi envoyer vers chaque zone de l'habitacle un air à température réglée qui résulte d'un mélange en proportion réglable d'un flux d'air chaud et d'un flux d'air froid.

Dans les dispositifs connus de ce genre, le radiateur de chauffage présente généralement la forme d'un rectangle et la division du passage d'air chaud en canaux d'air chaud s'effectue en sections rectangulaires par au moins une cloison s'étendant parallèlement à deux côtés du rectangle.

Ainsi, dans l'exemple d'un réglage séparé pour une zone droite et une zone gauche, le radiateur de chauffage est habituellement cloisonné en son milieu pour définir deux surfaces secondaires d'échange de chaleur ayant une forme rectangulaire dont la surface constitue la moitié de celle de l'échangeur de chaleur.

Le document FR 2829064 divulgue un tel dispositif.

Or, il a été constaté que le radiateur de chauffage, encore appelé aérotherme, possède un gradient de température, c'est-à-dire des différences de température, en fonction des points de la surface d'échange de chaleur.

Ce gradient de température peut atteindre des valeurs de 10°C, voire 20°C, avec des radiateurs de chauffage possédant des tubes à circulation en I ou des tubes à circulation en U. Ces différences de température font que la température moyenne du flux d'air chaud peut varier sensiblement d'un canal d'air chaud à un autre, ce qui pose des problèmes de mise au point aérothermique lors de l'utilisation de tels radiateurs.

Dans les dispositifs connus de ce genre, le mixage du flux d'air chaud et du flux d'air froid, pour chaque zone de l'habitacle, s'effectue par des volets ou analogues.

Une solution consiste à utiliser un volet d'obturation d'un canal de dérivation (canal d'air froid) dont le mouvement est coordonné à celui d'un organe à registre, par exemple d'une plaque ajourée ou non ajourée qui contrôle le passage du flux d'air chaud au travers du canal d'air chaud, comme enseigné par exemple par FR-A-2 829 064.

L'invention a notamment pour but de surmonter les inconvénients précités.

Elle vise plus particulièrement à faciliter la mise au point aérothermique d'un dispositif du type précité pour que les températures moyennes respectives des flux d'air chaud dans les différents canaux d'air chaud soient sensiblement identiques.

L'invention vise encore à procurer un dispositif du type précité qui convient tout particulièrement au réglage des paramètres aérothermiques dans au moins deux zones différentes d'un habitacle, notamment de véhicule automobile.

Elle propose à cet effet un dispositif du type défini en introduction, dans lequel le passage d'air chaud est divisé par des moyens de cloisonnement de forme choisie, agencés pour que la moyenne des températures de l'air en sortie du faisceau du radiateur soit sensiblement égale dans les canaux d'air chaud.

Ainsi, au lieu de diviser une surface d'échange de chaleur, habituellement de forme rectangulaire, par au moins une cloison en plusieurs surfaces secondaires, également de forme rectangulaire, correspondant à une fraction de la surface d'échange de chaleur, on adopte un cloisonnement de forme choisie.

Cette forme choisie est définie pour que la moyenne des températures de l'air en sortie du faisceau du radiateur soit sensiblement égale dans les différents canaux d'air chaud.

La forme du cloisonnement peut être établie empiriquement ou de préférence par le calcul à partir d'une cartographie des températures d'un radiateur particulier, cette cartographie dépendant à chaque fois du type du radiateur, et notamment de la configuration de son faisceau de tubes. Par l'expression "cartographie des températures", on entend désigner un relevé des températures de l'air en sortie du radiateur en différents points définis précisément, par exemple aux noeuds d'un quadrillage.

Il a été constaté que, dans la plupart des cas, le faisceau de tubes présente la forme d'un rectangle et que l'air en sortie du faisceau du radiateur possède respectivement une température maximale et une température minimale dans deux régions situées sensiblement aux deux extrémités d'une diagonale du rectangle.

L'invention propose alors de réaliser les moyens de cloisonnement pour qu'ils s'étendent approximativement dans la direction de cette diagonale.

Ces moyens de cloisonnement peuvent avoir différentes formes. Ils peuvent être constitués par un simple segment de droite, ou par une combinaison de différentes courbes, notamment de segments de droite et de segments courbes, etc.

De façon préférentielle, le faisceau de tubes du radiateur de chauffage est du type à circulation en I ou encore du type à circulation en U.

Dans la plupart des cas, le réglage de la température du flux d'air envoyé dans une zone de l'habitacle est obtenu, comme déjà mentionné, par un mélange ou mixage en proportion réglable d'un flux d'air chaud et d'un flux d'air froid.

Conformément à l'invention, on prévoit des moyens de réglage associés aux canaux d'air chaud et comprenant des plaques ajourées déplaçables en translation dans une même direction, entre une position rapprochée et une position éloignée, lesdites plaques ayant des bords respectifs susceptibles de coïncider dans la position rapprochée en adoptant la forme des moyens de cloisonnement.

Les bords des plaques ajourées viennent alors coïncider ou s'emboîter en correspondance de la forme définie par les moyens de cloisonnement.

De préférence, les plaques ajourées coopèrent avec des plaques fixes disposées à proximité d'une grande face du radiateur.

Les plaques ajourées et les plaques fixes sont avantageusement disposées le long d'une grande face du radiateur, appelée face amont, qui est située du côté de l'entrée de celui-ci.

De préférence, les moyens de cloisonnement comprennent au moins une cloison amont située en amont du radiateur de chauffage et au moins une cloison aval située en aval du radiateur de chauffage.

La cloison aval contribue avantageusement à délimiter au moins deux conduits de sortie desservant respectivement des zones différentes de l'habitacle.

Dans une forme de réalisation préférée de l'invention, le dispositif comprend deux canaux d'air chaud alimentant respectivement deux zones de l'habitacle, en particulier une zone droite et une zone gauche. Cependant, il est possible de prévoir plus de deux canaux d'air chaud pour alimenter plus de deux zones de l'habitacle, en particulier une zone droite avant, une zone gauche avant et soit une zone arrière unique, soit une zone arrière droite et une zone arrière gauche.

Selon une autre caractéristique de l'invention, le dispositif comprend en outre des canaux de dérivation associés respectivement aux canaux d'air chaud pour acheminer un flux d'air froid n'ayant pas traversé le radiateur, un volet de réglage étant prévu dans chaque canal de dérivation pour contrôler le flux d'air froid qui le traverse.

Le volet de réglage d'un canal de dérivation est avantageusement coordonné à une plaque ajourée du canal d'air chaud associé pour assurer un mixage en proportion réglable du flux d'air chaud circulant dans le canal d'air chaud et du flux d'air froid circulant dans le canal de dérivation.

Chaque canal de dérivation est avantageusement situé adjacent à un canal d'air chaud, le volet de réglage du canal de dérivation étant un volet de type pivotant relié à la plaque ajourée du canal d'air chaud associé.

Dans la description qui suit, faite à titre d'exemple, on se réfère aux dessins annexés, sur lesquels :
- la figure 1 est une vue en coupe transversale d'une partie d'un dispositif de chauffage, ventilation et/ou climatisation de l'art antérieur avec réglage séparé d'une zone droite et d'une zone gauche de l'habitacle ;
- la figure 2 représente un radiateur de chauffage du type à circulation en I ;
- la figure 3 représente un radiateur de chauffage du type à circulation en U ;
- la figure 4 représente un radiateur de chauffage du type à circulation en I, analogue à celui de la figure 2, dans lequel figurent différents points de mesure de température, ici vingt quatre points disposés suivant six rangées de quatre points ;
- la figure 5 représente un exemple d'une cartographie du radiateur de chauffage de la figure 4 où sont indiquées les températures, exprimées en degré C, des différents points de mesure de la figure 4 ;
- la figure 6 constitue une cartographie des zones de température du radiateur de chauffage de la figure 4, répartie ici en cinq zones Z1 à Z5, de la plus froide à la plus chaude ;
- les figures 7A à 13A montrent respectivement sept formes de réalisation différentes des moyens de réglage de température comprenant des plaques ajourées et des volets pivotants associés ;

Les figures 7B à 13B montrent schématiquement le contour des plaques ajourées en fonction de la cartographie des températures du radiateur de chauffage, en correspondance respectivement des figures 7A à 13A ;
- la figure 14 est une vue partielle en perspective de dessous d'un dispositif selon l'invention, du côté de la face amont du radiateur de chauffage, montrant la structure des moyens de cloisonnement, des plaques ajourées et des volets qui lui sont asssociés ;
- la figure 15 est une vue partielle en perspective du même radiateur de chauffage, du côté de la face aval, représentant les moyens de cloisonnement du côté de cette face aval ; et
- la figure 16 représente une vue analogue à la figure 14, sans le boîtier du dispositif.

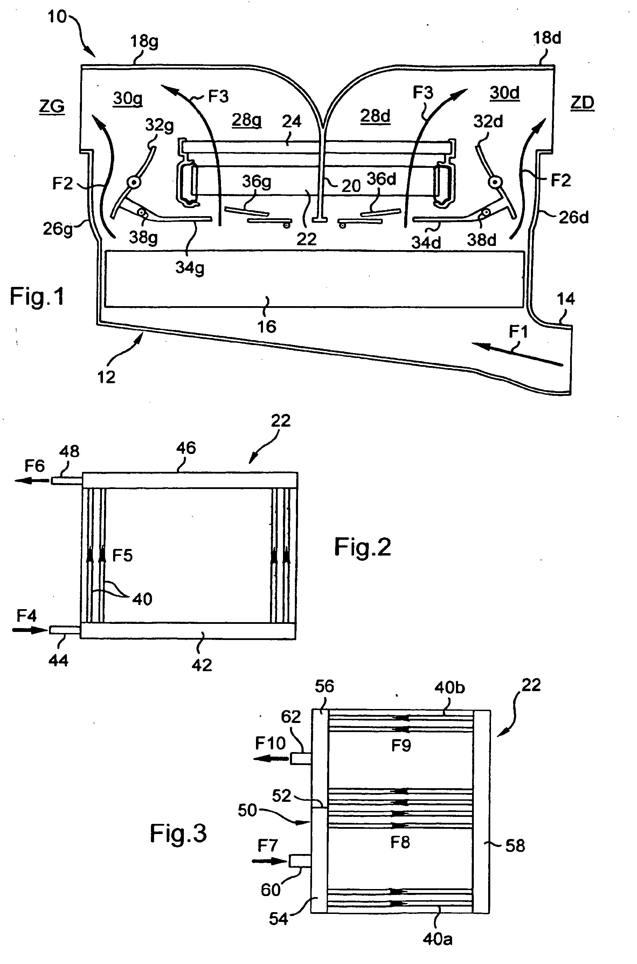

On se réfère d'abord à la figure 1 qui montre une partie d'un dispositif 10 de chauffage, ventilation et/ou climatisation de l'habitacle d'un véhicule automobile, conforme à l'art antérieur. Le dispositif comprend un boîtier 12 muni d'une entrée d'air 14 pour de l'air pulsé provenant d'une unité de ventilation (non représentée) encore appelée pulseur d'air. Le flux d'air pulsé pénètre dans le boîtier 12 comme montré par la flèche F1. Le flux d'air F1 traverse ensuite un évaporateur 16 faisant partie d'un circuit de climatisation et logé ici dans une position sensiblement horizontale. Le flux d'air F1 peut ainsi être réfrigéré ou climatisé en traversant l'évaporateur.

L'air est ensuite réparti en deux conduits 18d et 18g correspondant respectivement à une zone droite ZD et une zone gauche ZG de l'habitacle. Ces deux conduits 18d et 18g sont séparés par une cloison commune 20 située verticalement au-dessus de l'évaporateur 16 pour partager et répartir le flux d'air issu de l'évaporateur, par moitié.

Au-dessus de l'évaporateur sont logés successivement un radiateur de chauffage 22, encore appelé aérotherme, et un radiateur électrique d'appoint 24. Le radiateur 22 est parcouru par un fluide caloporteur, habituellement le liquide de refroidissment du moteur du véhicule. Le radiateur 24 comporte des résistances électriques, par exemple du type à coefficient de température positif (résistances CTP).

Les deux radiateurs de chauffage 22 et 24 ont une surface d'échange principale de forme générale rectangulaire et la cloison 20 divise les deux surfaces d'échange à chaque fois en deux surfaces secondaires, également de forme rectangulaire, qui correspondent à la moitié de la surface d'échange principale.

Les radiateurs 22 et 24 occupent seulement une partie de chaque moitié du boîtier telle que définie entre une paroi latérale 26d, respectivement, 26g, et la cloison 20. On définit ainsi dans le boîtier un passage d'air chaud qui est divisé en deux canaux d'air chaud 28d et 28g. A chacun des canaux d'air chaud 28d et 28g est associé respectivement un canal de dérivation 30d respectivement 30g pour de l'air froid qui ne traverse pas les radiateurs 22 et 24.

Chaque zone ZD et ZG de l'habitacle est alimentée, séparément, par un flux d'air à température ajustée obtenue par mélange en proportion variable du flux d'air froid F2 qui passe par le canal de dérivation 30d ou 30g et du flux d'air chaud F3 qui passe par le canal d'air chaud 28d ou 28g.

Cet ajustement est obtenu par un volet de réglage 32d respectivement 32g, ici du type papillon, monté dans le canal d'air froid correspondant 30d, respectivement 30g. Le mouvement de chacun de ces volets est coordonné avec celui d'une plaque ajourée 34d, respectivement 34g, déplaçable en translation dans une direction générale parallèle aux plans des échangeurs de chaleur 16, 22 et 24.

Ces plaques ajourées 34d et 34g coopèrent avec des plaques fixes 36d, respectivement 36g, situées en amont du radiateur de chauffage 22. Chacune des plaques ajourées 34d et 34g est articulée aux volets respectifs 32d, 32g par une articulation 38d respectivement 38g, éventuellement par l'intermédiaire d'un bielle. Chacune des plaques ajourées 34d et 34g coopère avec la plaque fixe associée 36d ou 36g à la manière d'un registre pour contrôler l'entrée de la moitié correspondante du radiateur de chauffage 22 et donc le débit du flux d'air chaud (flèche F3).
Comme on peut le constater sur la figure 1, la division du radiateur 22 (de même que celle du radiateur 24) s'effectue en deux moitiés de forme rectangulaire.

Le radiateur de chauffage 22 comprend habituellement un faisceau de tubes parcourus par un fluide caloporteur, qui est le plus souvent constitué par le liquide de refroidissement du moteur du véhicule.

La figure 2 illustre un radiateur de chauffage 22 du type à circulation en I comportant une multiplicité de tubes parallèles 40 disposés entre une boîte collectrice d'entrée 42 munie d'une tubulure d'entrée 44 et une boîte collectrice de sortie 46 munie d'une tubulure de sortie 48.

Le fluide caloporteur pénètre dans la tubulure 44 comme montré par la flèche F4, circule ensuite en parallèle dans les tubes 40 comme montré par les flèches F5 (circulation en I) pour gagner la boîte collectrice de sortie 46 et quitter le radiateur par la tubulure 48 comme montré par la flèche F6.

Le radiateur de chauffage 22 représenté à la figure 3 comprend une première boîte collectrice 50 divisée par une cloison de séparation 52 en un compartiment d'entrée 54 et un compartiment de sortie 56. A l'autre extrémité du faisceau est prévue une deuxième boîte collectrice 58 formant une boîte de retour. Le liquide caloporteur pénètre dans le compartiment d'entrée 54 par une tubulure d'entrée 60 comme montré par la flèche F7. Il circule ensuite dans un premier groupe de tubes 40a comme montré par les flèches F8 pour gagner la boîte collectrice 58 et il retourne ensuite vers le compartiment de sortie 56 par un second groupe de tubes 40b comme montré par les flèches F9. Le fluide caloporteur quitte ensuite le radiateur par une tubulure de sortie 62 comme montré par la flèche F10.

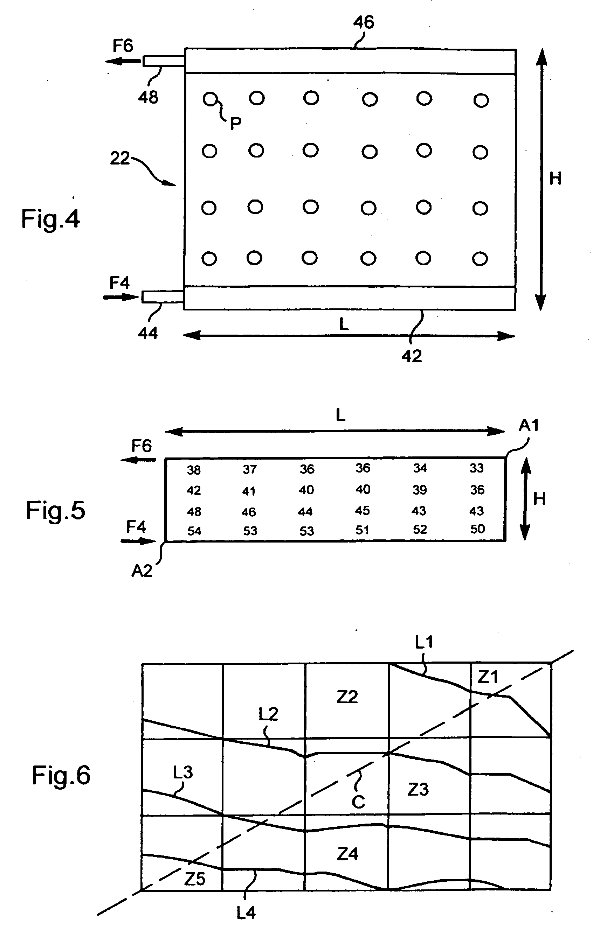

Le radiateur de chauffage 22 de la figure 4 est semblable à celui de la figure 2. On a représenté sur celui-ci différents points de mesure P, dans l'exemple vingt quatre points répartis en six rangées de quatre points, en formant un quadrillage de la surface d'échange du radiateur. Cette dernière est définie par une largeur L et un hauteur H. Ces points de mesure permettent d'établir une cartographie des températures du radiateur de chauffage comme montré sur la figure 5.

Sur cette dernière, sont montrées à titre d'exemple différentes valeurs de température, indiquées en degrés C, obtenues avec l'échangeur de la figure 4 pour les différents points de mesure P. On constate une grande diversité des températures, la température la plus basse étant, dans l'exemple, de 33°C dans l'angle supérieur droit A1 du radiateur et de 54°C dans l'angle inférieur gauche A2 comme montré sur la figure 5.

La figure 6 montre une cartographie des températures correspondantes établie en différentes zones, dans l'exemple cinq zones identifiées de Z1 pour la zone la plus froide (du côté de l'angle A1) jusqu'à Z5 pour la zone la plus chaude (du côté de l'angle A2).

Dans l'exemple, les zones Z1 à Z5 correspondent respectivement aux intervalles de températures suivants : 31-36°C, 36-41°C. 41-46°C, 46-51°C et 51-56°C. Les limites entre les différentes zones Z1 à Z5 sont identifiées par des lignes L1, L2, L3 et L4.

La cartographie des températures du radiateur montre que celui-ci présente un fort gradient de température, c'est-à-dire des différences de température pouvant atteindre environ 20°C entre les zones les plus chaudes et les zones les plus froides.

On comprend que si l'on divise la surface d'échange du radiateur en deux surfaces secondaires de forme rectangulaire, correspondant à la moitié de la surface d'échange principale, comme dans le cas du cloisonnement de la figure 1 (art antérieur), la température moyenne du flux d'air chaud issu de chacune des surfaces d'échange secondaires sera différente.

L'invention vise à surmonter cet inconvénient en proposant de diviser le passage d'air chaud correspondant au radiateur de chauffage 22 en deux canaux d'air chaud (dans l'exemple), par des moyens de cloisonnement de forme choisie, agencés pour que la moyenne des températures de l'air en sortie du faisceau du radiateur soit sensiblement égale dans les canaux d'air chaud correspondants. De façon grossière, ce cloisonnement s'étend suivant une diagonale qui s'étend entre la zone Z1 où la température de l'air en sortie du faisceau est minimale (T min) et la zone Z5 où la température de l'air en sortie du faisceau est maximale (T max). Ces zones Z1 et Z2 sont situées dans les angles A1 et A2 qui sont aux extrémités d'une diagonale.

On constate à l'examen de la cartographie des figures 5 et 6 que si l'on effectue un tel cloisonnement C (figure 6), on compense à chaque fois les différences de température en ajoutant de l'air plus froid à la zone la plus chaude et inversement, de l'air plus chaud à la zone la plus froide pour réaliser une compensation de température. La forme du cloisonnement est déterminée empiriquement, ou de préférence par le calcul, à partir de la cartographie de températures du radiateur de chauffage considéré, cette cartographie variant notamment avec le type de circulation du fluide dans les tubes.

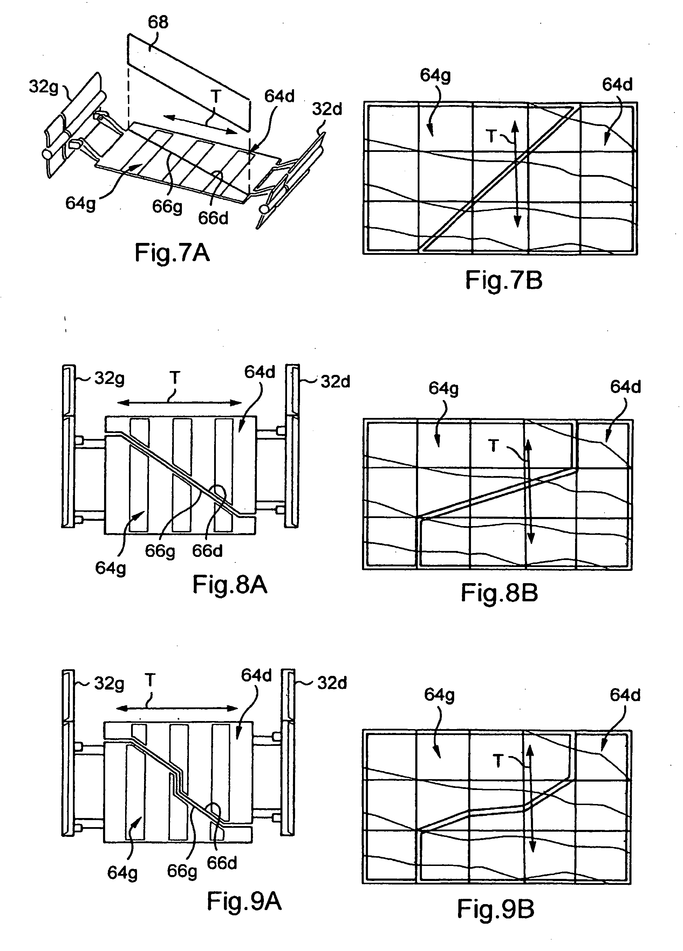

On se réfère maintenant aux figures 7A et 7B qui correspondent à un premier exemple de réalisation selon l'invention pour un dispositif analogue à celui de la figure 1 mais adoptant un cloisonnement différent et des plaques ajourées de forme différente. Sur la figure 7A, on voit les plaques ajourées 64d et 64g coordonnées respectivement avec deux volets 32d et 32g analogues à ceux de la figure 1. On voit que les plaques ajourées 64d et 64g prennent chacune sensiblement la forme d'un trapèze rectangle et présentent des bords respectifs 66d et 66g susceptibles de venir en coïncidence lorsque ces deux plaques sont en position rapprochée comme montré sur les figures 7A et 7B.

Sur la figure 7A, on a montré également de façon schématique le cloisonnement 68 associé au radiateur de chauffage 22. Ce cloisonnement est avantageusement situé en amont du radiateur de chauffage, c'est-à-dire du côté de la face principale d'entrée. Il s'étend approximativement suivant une diagonale du rectangle comme pour la cloison C représentée schématiquement à la figure 6.

Les plaques ajourées 64d et 64g sont déplaçables en translation dans une même direction de translation, comme représenté par la double flèche T sur les figures 7A et 7B. Dans la position rapprochée, les bords respectifs 66d et 66g sont rapprochés. Par contre, dans la position éloignée (non représentée), ces bords sont éloignés l'un de l'autre. On constate que les bords respectifs des plaques 64d et 64g coïncident, dans la position rapprochée en adoptant la forme des moyens de cloisonnement. Dans cette position rapprochée, les plaques ajourées coopèrent avec des plaques fixes pour obturer complètement l'accès au radiateur de chauffage 22, tandis que les volets 32 et 32g sont ouverts pour ouvrir complètement le passage d'air froid correspondant.

Par contre, lorsque les plaques ajourées sont en position éloignée, elles ouvrent complètement l'accès au radiateur de chauffage, tandis que les volets 32d et 32g ferment complètement le canal d'air froid correspondant.
Bien entendu, le déplacement des plaques ajourées et des volets s'effectue de façon indépendante de chaque côté pour permettre un réglage séparé des paramètres aérothermiques dans les zones ZD et ZG de l'habitacle.

Dans le cas des figures 8A et 8B, la cloison 68 et les bords respectifs 66d et 66g des plaques ajourées ont une forme différente constituée de trois segments, à savoir un segment intermédiaire dans une direction sensiblement oblique et deux segments d'extrémité dans une direction sensiblement parallèle aux petits côtés du rectangle du radiateur de hauteur H.

Dans le cas des figures 9A et 9B, on retrouve une configuration analogue à celle des figures 8A et 8B, sauf que le segment intermédiaire est composé lui-même de trois segments non alignés.

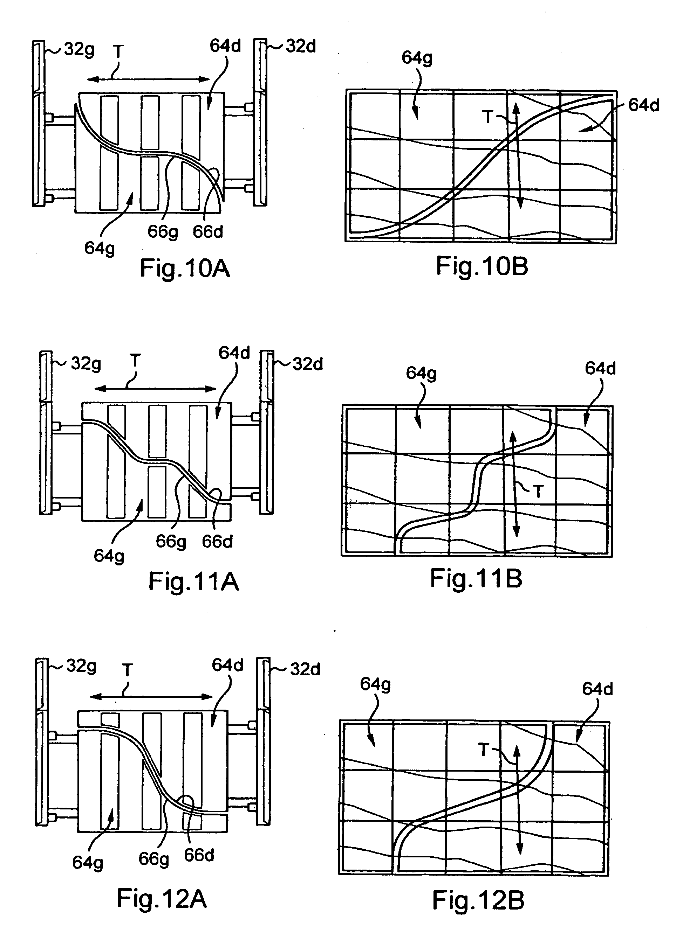

Dans le cas des figures 10A et 10B, les bords respectifs des plaques ajourées ont la forme d'une courbe présentant un point d'inflexion.

Dans le cas des figures 11A et 11B, les bords respectifs des plaques ajourées ont une forme sinueuse qui s'apparente à celle des figures 9A et 9B, mais dont les angles sont arrondis.

Dans le cas des figures 12A et 12B, les bords respectifs des plaques ajourées ont également une forme sinueuse qui s'apparente à celle des figures 8A et 8B, les angles étant ici arrondis.

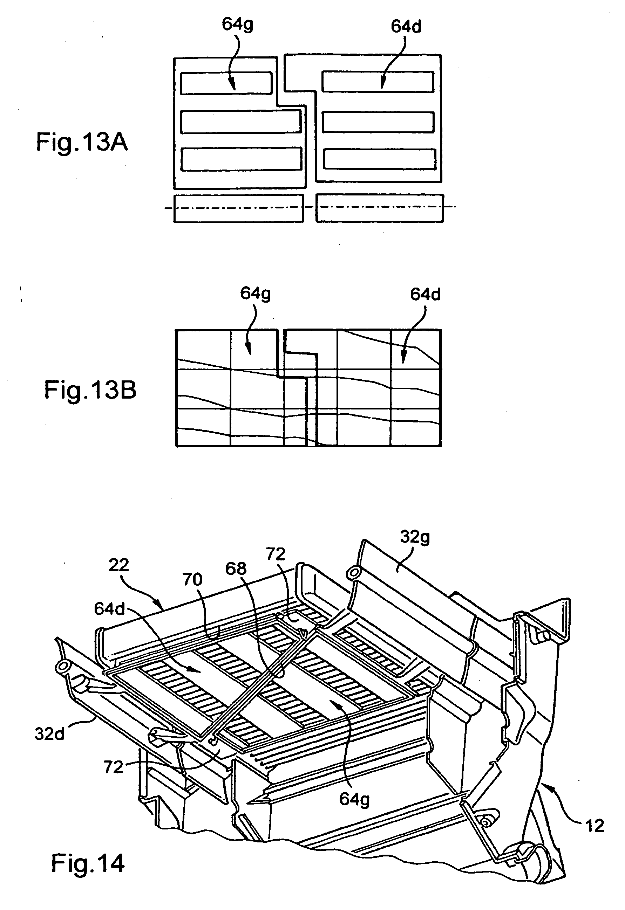

Les figures 13A et 13B montrent une autre configuration dans laquelle le passage d'air froid (canal de dérivation) s'effectue soit par le dessus, soit par le dessous du radiateur.

On se réfère maintenant à la figure 14 qui montre une partie du boîtier 12 d'un dispositif selon l'invention, analogue à celui des figures 7A et 7B. On voit sur cette figure la cloison 68 disposée obliquement du côté de la face amont 70, ou face d'entrée, du radiateur 22. On aperçoit également sur la figure 14 les plaques fixes 72, déjà mentionnées, avec lesquelles coopèrent les plaques ajourées 64d et 64g. On a représenté aussi sur cette figure les volets 32d et 32g dont le déplacement en rotation est coordonné à la plaque ajourée respective 64d ou 64g.

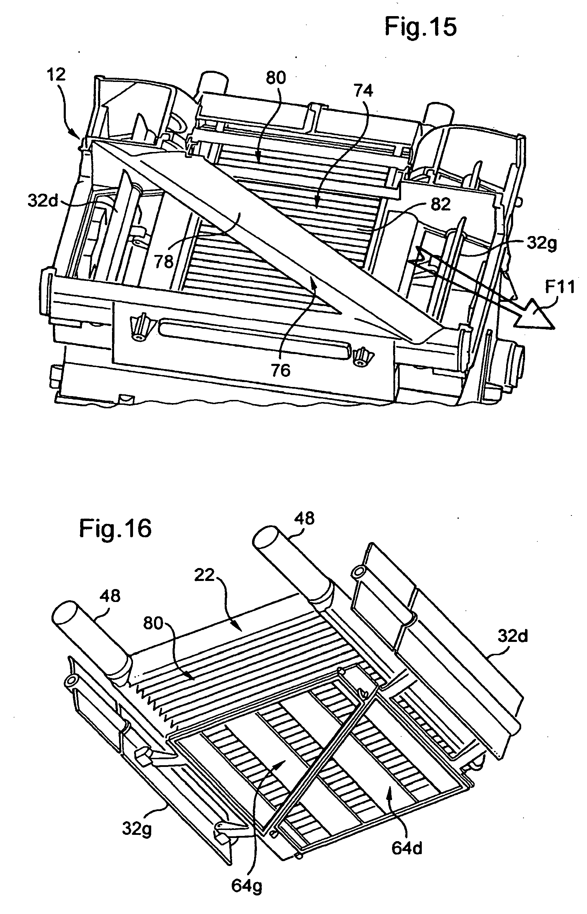

La figure 15 montre le dispositif de la figure 14, du côté de la face aval 74, ou face de sortie, du radiateur de chauffage 22. Le boîtier 12 du dispositif possède une forme 76 faisant office de canal d'air chaud 78 dont la forme de séparation correspond à celle de la cloison 68 de la figure 14. Ctte forme 76 constitue ainsi une cloison aval. Il est avantageux en effet de prévoir, du côté de la face aval, un cloisonnement dont la forme correspond sensiblement à celle du cloisonnement de la face amont, c'est-à-dire à celle de la cloison 68.

Dans l'exemple des figures 15 et 16 le dispositif permet un réglage aérothermique séparé dans trois zones différentes de l'habitacle. Le radiateur possède un cloisonnement non rectangulaire qui permet d'envoyer plus d'air chaud en mode dégivrage vers le côté conducteur pour dégivrer en priorité la partie du pare-brise correspondant au conducteur. L'air supplémentaire provient d'une partie 80 du radiateur dédiée aux places arrière. En position dégivrage, un volet (non représenté) contourne la zone arrière et dirige de l'air chaud vers un canal d'air chaud 82 dédié au conducteur, comme montré par la flèche F11.

La figure 16 est une vue analogue à la figure 14, prise suivant une autre orientation, le boîtier 12 étant supprimé. On voit donc les mêmes éléments que sur la figure 14, y compris la partie 80 du radiateur mentionnée en liaison avec la figure 15. On voit aussi les tubulures 44 et 48 d'entrée et de sortie du radiateur de chauffage 22.

Dans l'exemple représenté les plaques ajourées 64d et 64g ainsi que les plaques fixes 72 couvrent une partie prépondérante de la face amont du radiateur 22 pour dégager la partie 80 du radiateur de chauffage. Cependant, dans le cas d'un dispositif correspondant à un réglage en deux zones de l'habitacle, les plaques 64d, 64g et 72 peuvent couvrir sensiblement la totalité de la face amont du radiateur 22.

L'invention permet ainsi d'utiliser des radiateurs de chauffage à fort gradient de température et cela dans n'importe quelle orientation.

Un autre avantage est que les radiateurs, et notamment ceux à fort gradient de température, peuvent être positionnés de telle sorte que le parcours des tubes s'effectue directement à travers le tablier qui sépare le compartiment moteur de l'habitacle, en étant le plus court possible.

L'invention permet aussi d'utiliser le dispositif dans le cas d'un réglage aérothermique dans un nombre de zones qui peut être supérieur à deux. En particulier, il trouve une application dans le cas des dispositifs à trois zones de réglage.

La cloison 20 ou 68 peut aussi être décalée par exemple vers la droite ou vers la gauche pour privilégier, si on le souhaite, un côté ou plus généralement une zone de l'habitacle.

Le nombre de zones peut varier. Ainsi bien au lieu de prévoir un réglage en deux zones, par exemple droite et gauche, on peut dupliquer le réglage en deux zones pour prévoir un réglage en quatre zones, par exemple deux zones avant, droite et gauche, et deux zones arrière, droite et gauche.

On peut aussi prévoir une troisième zone sans régulation, comme décrit précédemment en liaison avec la figure 15.

Bien que l'invention ait été décrite en référence particulière à un dispositif dans lequel le réglage de la température s'effectue à chaque fois par mixage d'un flux d'air chaud et d'un flux d'air froid, il est envisageable aussi de l'appliquer à un dispositif dans lequel le réglage de la température s'effectue par le réglage du débit du fluide caloporteur traversant le radiateur de chauffage.

L'invention trouve une application particulière aux véhicules automobiles.

## Revendications

1. Dispositif de chauffage, ventilation et/ou climatisation d'un habitacle,notamment de véhicule, du type comprenant un boîtier (12) muni d'une entrée d'air pulsé (14), un radiateur de chauffage (22) comportant un faisceau de tubes (40) parcouru par un fluide caloporteur, le radiateur étant logé dans le boîtier, et un passage d'air chaud divisé en au moins deux canaux d'air chaud (28d, 28g) pour acheminer des flux d'air chaud respectifs (F3) traversant le radiateur vers des zones différentes (ZD, ZG) de l'habitacle, ledit passage d'air chaud étant divisé par des moyens de cloisonnement (68),
**caractérisé en ce que**
lesdits moyens de cloisonnement (68) sont de forme choisie et agencés pour que la moyenne des températures de l'air en sortie du faisceau du radiateur de chauffage (22) soit sensiblement égale dans les canaux d'air chaud (28d, 28g).

2. Dispositif selon la revendication 1, dans lequel le faisceau de tubes (40) présente la forme d'un rectangle et l'air en sortie du faisceau possède une température maximale (T max) et une température minimale (T min) dans deux régions (Z1, Z2) situées respectivement aux deux extrémités (A1, A2) d'une diagonale du rectangle, **caractérisé en ce que** les moyens de cloisonnement (68) s'étendent approximativement dans la direction de cette diagonale.

3. Dispositif selon l'une des revendications 1 et 2, **caractérisé en ce que** le faisceau de tubes (40) est du type à circulation en I.

4. Dispositif selon l'une des revendications 1 et 2, **caractérisé en ce que** le faisceau de tubes (40) est du type à circulation en U.

5. Dispositif selon l'une des revendications 1 à 4, **caractérisé en ce qu'**il comprend des moyens de réglage associés aux canaux d'air chaud (28d, 28g) et comprenant des plaques ajourées (64d, 64g) déplaçables en translation dans une même direction (T), entre une position rapprochée et une position éloignée, lesdites plaques ayant des bords respectifs (66d, 66g) susceptibles de coïncider dans la position rapprochée en adoptant la forme des moyens de cloisonnement (68).

6. Dispositif selon la revendication 5, **caractérisé en ce que** les plaques ajourées (64d, 64g) coopèrent avec des plaques fixes (72) disposées à proximité d'une grande face (70) du radiateur (22).

7. Dispositif selon la revendication 6, **caractérisé en ce que** les plaques ajourées (64d, 64g) et les plaques fixes (72) sont disposées le long d'une grande face (70) du radiateur, appelée face amont.

8. Dispositif selon l'une des revendications 5 à 7, **caractérisé en ce que** les moyens de cloisonnement comprennent au moins une cloison amont (68) située en amont du radiateur de chauffage (22) et au moins une cloison aval (76) située en aval du radiateur de chauffage (22).

9. Dispositif selon la revendication 8, **caractérisé en ce que** la cloison aval (76) contribue à délimiter au moins deux conduits de sortie (18d, 18g) desservant respectivement des zones différentes (ZD, ZG) de l'habitacle.

10. Dispositif selon l'une des revendications 1 à 9, **caractérisé en ce qu'**il comprend deux canaux d'air chaud (28d, 28g) alimentant respectivement deux zones (ZD, ZG) de l'habitacle, en particulier une zone droite et une zone gauche.

11. Dispositif selon l'une des revendications 5 à 10, **caractérisé en ce qu'**il comprend des canaux de dérivation (30d, 30g) associés respectivement aux canaux d'air chaud (28d, 28g) pour acheminer un flux d'air froid (F2) n'ayant pas traversé le radiateur (22) et **en ce qu'**un volet de réglage (32d, 32g) est prévu dans chaque canal de dérivation pour contrôler le flux d'air froid (F2) qui le traverse.

12. Dispositif selon la revendication 11, **caractérisé en ce que** le volet de réglage (32d, 32g) d'un canal de dérivation (30d, 30g) est coordonné à une plaque ajourée (64d, 64g) du canal d'air chaud associé pour assurer un mixage en proportion réglable du flux d'air chaud (F3) circulant dans le canal d'air chaud et du flux d'air froid (F2) circulant dans le canal de dérivation.

13. Dispositif selon l'une des revendications 11 et 12, **caractérisé en ce que** chaque canal de dérivation (30d, 30g) est situé adjacent à un canal d'air chaud (28d, 28g) et **en ce que** le volet de réglage du canal de dérivation est un volet de type pivotant relié à la plaque ajourée du canal d'air chaud associé.

## Claims

1. Device for the heating, ventilation and/or air-conditioning of a cabin, particularly of a vehicle, of the type comprising a casing (12) equipped with a blown-air inlet (14), a heating radiator (22) comprising a bundle of tubes (40) through which a heat-transfer fluid flows, the radiator being housed inside the casing, and a hot air passage divided into at least two hot air channels (28d, 28g) for carrying the respective hot air flows (F3) that pass through the radiator to different zones (ZD, ZG) of the cabin, the said hot air passage being divided by partitioning means (68), **characterized in that** the said partitioning means (68) are of a chosen shape and are arranged in such a way that the mean of the air temperatures leaving the heating radiator bundle (22) is substantially equal in the hot air channels (28d, 28g).

2. Device according to Claim 1, in which the bundle of tubes (40) is in the shape of a rectangle and the air leaving the bundle has a maximum temperature (T max) and a minimum temperature (T min) in two regions (Z1, Z2) respectively located at the two ends (A1, A2) of a diagonal of the rectangle, **characterized in that** the partitioning means (68) run approximately in the direction of this diagonal.

3. Device according to one of Claims 1 and 2, **characterized in that** the bundle of tubes (40) is of the I-circulation type.

4. Device according to one of Claims 1 and 2, **characterized in that** the bundle of tubes (40) is of the U-circulation type.

5. Device according to one of Claims 1 to 4, **characterized in that** it comprises regulating means associated with the hot air channels (28d, 28g) and comprising perforated plates (64d, 64g) which can be moved translationally in one and the same direction (T) between a close position and a distant position, the said plates having respective edges (66d, 66g) that are able to coincide in the close position, thereby adopting the shape of the partitioning means (68).

6. Device according to Claim 5, **characterized in that** the perforated plates (64d, 64g) collaborate with fixed plates (72) positioned near a large face (70) of the radiator (22).

7. Device according to Claim 6, **characterized in that** the perforated plates (64d, 64g) and fixed plates (72) are positioned along a large face (70) of the radiator, known as the upstream face.

8. Device according to one of Claims 5 to 7, **characterized in that** the partitioning means comprise at least one upstream partition (68) situated upstream of the heating radiator (22) and at least one downstream partition (76) situated downstream of the heating radiator (22).

9. Device according to Claim 8, **characterized in that** the downstream partition (76) contributes to defining at least two outlet ducts (18d, 18g) respectively serving different zones (ZD, ZG) of the cabin.

10. Device according to one of Claims 1 to 9, **characterized in that** it comprises two hot air channels (28d, 28g) respectively supplying two zones (ZD, ZG) of the cabin, particularly a right-hand zone and a lefthand zone.

11. Device according to one of Claims 5 to 10, **characterized in that** it comprises bypass channels (30d, 30g) associated respectively with the hot air channels (28d, 28g) for carrying a cold air flow (F2) that has not passed through the radiator (22), and **in that** a regulating shutter (32d, 32g) is provided in each bypass channel to control the cold air flow (F2) passing through it.

12. Device according to Claim 11, **characterized in that** the regulating shutter (32d, 32g) of one bypass channel (30d, 30g) is coordinated with a perforated plate (64d, 64g) of the associated hot air channel in order to mix the hot air flow (F3) flowing through the hot air channel and the cold air flow (F2) flowing through the bypass channel in adjustable proportions.

13. Device according to one of Claims 11 and 12, **characterized in that** each bypass channel (30d, 30g) is positioned adjacent to a hot air channel (28d, 28g), and **in that** the regulating shutter of the bypass channel is a shutter of the pivoting type connected to the perforated plate of the associated hot air channel.

## Patentansprüche

1. Vorrichtung zum Heizen, Lüften und/oder Klimatisieren eines Innenraums, insbesondere eines Fahrzeuginnenraums, von dem Typ, der ein Gehäuse (12), das mit einem Eingang für Umwälzluft (14) versehen ist, einen Heizkörper (22), der ein Bündel von Rohren (40) aufweist, das von einem Wärmeträgerfluid durchflossen wird, wobei der Heizkörper im Gehäuse angeordnet ist, und eine Warmluftdurchführung aufweist, die in mindestens zwei Warmluftkanäle (28d, 28g) aufgeteilt ist, um den Heizkörper durchquerende Warmluftströme (F3) zu verschiedenen Zonen (ZD, ZG) des Innenraums zu leiten, wobei die Warmluftdurchführung von Unterteilungsmitteln (68) geteilt wird,
**dadurch gekennzeichnet, dass** die Unterteilungsmittel (68) von gewählter Form und so angeordnet sind, dass der Mittelwert der Temperaturen der Luft am Ausgang des Bündels des Heizkörpers (22) in den Warmluftkanälen (28d, 28g) im Wesentlichen gleich ist.

2. Vorrichtung nach Anspruch 1, bei der das Bündel von Rohren (40) die Form eines Rechtecks hat und die Luft am Ausgang des Bündels eine maximale Temperatur (T max) und eine minimale Temperatur (T min) in zwei Bereichen (Z1, Z2) besitzt, die sich an den zwei Enden (A1, A2) einer Diagonale des Rechtecks befinden, **dadurch gekennzeichnet, dass** die Unterteilungsmittel (68) sich in etwa in der Richtung dieser Diagonale erstrecken.

3. Vorrichtung nach einem der Ansprüche 1 und 2, **dadurch gekennzeichnet, dass** das Rohrbündel (40) vom Typ mit I-förmigem Umlauf ist.

4. Vorrichtung nach einem der Ansprüche 1 und 2, **dadurch gekennzeichnet, dass** das Rohrbündel (40) vom Typ mit U-förmigem Umlauf ist.

5. Vorrichtung nach einem der Ansprüche 1 bis 4, **dadurch gekennzeichnet, dass** sie Einstellmittel aufweist, die den Warmluftkanälen (28d, 28g) zugeordnet sind und Lochplatten (64d, 64g) aufweisen, die in Translation in der gleichen Richtung (T) zwischen einer nahen Stellung und einer fernen Stellung verschiebbar sind, wobei die Platten Ränder (66d, 66g) haben, die in der nahen Stellung zusammenfallen können, indem sie die Form der Unterteilungsmittel (68) annehmen.

6. Vorrichtung nach Anspruch 5, **dadurch gekennzeichnet, dass** die Lochplatten (64d, 64g) mit festen Platten (72) zusammenwirken, die in der Nähe einer großen Seite (70) des Heizkörpers (22) angeordnet sind.

7. Vorrichtung nach Anspruch 6, **dadurch gekennzeichnet, dass** die Lochplatten (64d, 64g) und die festen Platten (72) entlang einer großen Seite (70) des Heizkörpers, Vorderseite genannt, angeordnet sind.

8. Vorrichtung nach einem der Ansprüche 5 bis 7, **dadurch gekennzeichnet, dass** die Unterteilungsmittel mindestens eine vordere Trennwand (68), die sich vor dem Heizkörper (22) befindet, und mindestens eine hintere Trennwand (76) aufweisen, die sich hinter dem Heizkörper (22) befindet.

9. Vorrichtung nach Anspruch 8, **dadurch gekennzeichnet, dass** die vordere Trennwand (76) dazu beiträgt, mindestens zwei Ausgangsleitungen (18d, 18g) zu begrenzen, die unterschiedliche Zonen (ZD, ZG) des Innenraums versorgen.

10. Vorrichtung nach einem der Ansprüche 1 bis 9, **dadurch gekennzeichnet, dass** sie zwei Warmluftkanäle (28d, 28g) aufweist, die zwei Zonen (ZD, ZG) des Innenraums speisen, insbesondere eine rechte Zone und eine linke Zone.

11. Vorrichtung nach einem der Ansprüche 5 bis 10, **dadurch gekennzeichnet, dass** sie Abzweigkanäle (30d, 30g) aufweist, die den Warmluftkanälen (28d, 28g) zugeordnet sind, um einen Kaltluftstrom (F2) zu befördern, der den Heizkörper (22) nicht durchquert hat, und dass eine Einstellklappe (32d, 32g) in jedem Abzweigkanal vorgesehen ist, um den ihn durchquerenden Kaltluftstrom (F2) zu steuern.

12. Vorrichtung nach Anspruch 11, **dadurch gekennzeichnet, dass** die Einstellklappe (32d, 32g) eines Abzweigkanals (30d, 30g) mit einer Lochplatte (64d, 64g) des zugeordneten Warmluftkanals koordiniert ist, um eine Mischung des im Warmluftkanal fließenden Warmluftstroms (F3) und des im Abzweigkanal fließenden Kaltluftstroms (F2) in einstellbarem Verhältnis zu gewährleisten.

13. Vorrichtung nach einem der Ansprüche 11 und 12, **dadurch gekennzeichnet, dass** jeder Abzweigkanal (30d, 30g) neben einem Warmluftkanal (28d, 28g) angeordnet ist, und dass die Einstellklappe des Abzweigkanals eine Klappe vom schwenkenden Typ ist, die mit der Lochplatte des zugeordneten Warmluftkanals verbunden ist.
